# EUROPEAN PATENT SPECIFICATION

(11) **EP 3 922 944 B1**
(45) Date of publication and mention of the grant of the patent: **11.03.2026**
(21) Application number: 21178023.4
(22) Date of filing: 07.06.2021
(51) Int. Cl.: G01C 15/00

(54) **SURVEYING INSTRUMENT AND SURVEYING SYSTEM**
VERMESSUNGSINSTRUMENT UND VERMESSUNGSSYSTEM
INSTRUMENT D'ARPENTAGE ET SYSTÈME D'ARPENTAGE

(30) Priority: 08.06.2020 JP 2020099150
(43) Date of publication of application: 15.12.2021
(73) Proprietor: TOPCON CORPORATION, Tokyo 174-8580 (JP)
(72) Inventor: OHTOMO, Fumio, Saitama, 4-2-26 (JP); KUMAGAI, Kaoru, Tokyo-to, 174-8580 (JP); ANAI, Tetsuji, Tokyo-to, 174-8580 (JP)
(74) Representative: Louis Pöhlau Lohrentz

(56) References cited:
- EP-A1- 2 098 821
- EP-A1- 2 105 705
- EP-A1- 3 882 570
- US-A1- 2004 246 498
- US-A1- 2017 227 357
- US-A1- 2018 284 235
- US-A1- 2020 096 334

## Description

### BACKGROUND OF THE INVENTION

The present invention relates to a surveying instrument and a surveying system which can acquire wide angle images and narrow angle images.

Each document EP 3 882 570 A1, US 2020/0096334 A1 and US 2004/0246498 A1 discloses a surveying instrument including an arithmetic control module, a wide-angle image pickup module for acquiring a wide-angle image, a narrow-angle image pickup module for acquiring a narrow angle image and an attitude detector. Document EP 2 105 705 A1 discloses a surveying instrument including an image display area. On the image display area, a longitudinal reticle and a transverse reticle are displayed. Document EP 2 098 821 A1 discloses a geographical data collecting device comprising a tilt sensor, a display unit and a control arithmetic unit. The control arithmetic unit displays a scale to indicate horizontal and vertical lines on the display unit and controls the scale display so that the scale always indicates the horizontal and the vertical lines in the image based on a result of detection of tilting from the tilt sensor.

There is a laser scanner as a surveying instrument. Further, in recent years, to confirm conditions inside and outside a building or the arrangement of objects, a method for acquiring a horizontal cross section with the use of a laser scanner has been used.

However, in general laser scanners, a scan direction cannot be freely set. Therefore, in conventional examples, a whole circumference (360°) is scanned, and the scan data of the whole circumference is acquired. Then, the data of a horizontal direction is extracted from the scan data of the whole circumference by the post-processing, and a horizontal cross section is acquired.

For this reason, the number of data to be acquired increases, a scan time or a data processing time increases, and a calculation burden becomes large.

Further, a position of a surveying instrument at the time of acquiring scan data is estimated from a rough image and a shape acquired from the scan data. Therefore, a scan position cannot be accurately identified depending on a change point on a surface or an irregular surface of an object.

### SUMMARY OF INVENTION

It is an object of the present invention to provide a surveying instrument and a surveying system which can efficiently acquire the horizontal cross-sectional data.

To attain the object as described above, a surveying instrument according to the present invention is defined by claim 1.

Further, in the surveying instrument according to the invention, the arithmetic control module is configured to show a horizontal line at a predetermined position of at least one of the wide angle image and the narrow angle image based on a detection result of the attitude detector.

Further, in the surveying instrument according to the invention, the arithmetic control module is configured to extract a ridge line of a building in the narrow angle image, further detect a vertical portion ridge line from the extracted ridge line, drive the optical axis deflector so that a scan is performed with the distance measuring light in a predetermined scan pattern, perform a scan with the distance measuring light along the horizontal line so as to cross the vertical portion ridge line, and acquire the narrow angle image.

Further, in the surveying instrument according to a preferred embodiment, further including a surveying instrument main body and a support device configured to support the surveying instrument main body rotatably in a lateral direction, wherein a first wide angle image is acquired at a predetermined position, then the surveying instrument main body is rotated in the lateral direction, a second wide angle image is acquired so that the second wide angle image partially overlaps the first wide angle image, and the arithmetic control module is configured to perform an image matching of the first wide angle image and the second wide angle image based on the at least one narrow angle image included in each overlap portion.

Further, in the surveying instrument according to a preferred embodiment, further including a surveying instrument main body configured to be rotatable about a shaft portion in a longitudinal direction, wherein a first wide angle image is acquired at a predetermined position, then the surveying instrument main body is rotated in the longitudinal direction, a second wide angle image is acquired so that the second wide angle image partially overlaps the first wide angle image, and the arithmetic control module is configured to perform an image matching of the first wide angle image and the second wide angle image based on the at least one narrow angle image included in each overlap portion.

Furthermore, a surveying system according to the present invention includes a surveying instrument and a terminal device configured to be communicable with the surveying instrument, wherein the terminal device is configured to enable a transmission and a reception of at least one of the wide angle image and the narrow angle image to and from the surveying instrument.

As a result, the distance measurement in the entire range of the narrow angle image does not have to be performed, the number of times of the measurement and a time required to complete the measurement can be greatly reduced, and a scan of a horizontal cross section can be efficiently carried out.

As a result, a worker can directly visually confirm the object and specify a level position, and the workability can be improved.

### BRIEF DESCRIPTION OF THE DRAWINGS

FIG.1 is a schematic block diagram to show a surveying instrument.
FIG.2 is a side elevation view to show an optical axis deflector in the surveying instrument.
FIG.3A is a perspective view to show the optical axis deflector, and FIG.3B is an enlarged view to show a primary part of wavelength dispersion compensation prisms.
FIG.4 is a graph to show a relationship of wavelengths and an error between the wavelength dispersion compensation prism according to the present embodiment and a normal optical prism.
FIG.5 is an explanatory drawing to explain a relationship between a deflecting direction and a synthetic deflecting direction of each disk prism.
FIG.6A shows a narrow angle image in a state where a magnification in a Y axis direction is not changed, and FIG.6B shows a narrow angle image in a state where the magnification in the Y axis direction has been changed.
FIG.7 is a graph to show an angular difference of each disk prism and a change in magnification in the Y axis direction.
FIG.8 is an explanatory drawing to show a relationship between a wide angle image and a narrow angle image.
FIG.9A is an explanatory drawing to show a relationship between a wide angle image and a narrow angle image acquired so that a building is included, and FIG.9B is an explanatory drawing to show a case where a level position is set using a terminal device.
FIG.10 is a side elevation view to show a surveying instrument according to a second embodiment.
FIG.11 is a back elevation view to show the surveying instrument according to the second embodiment.
FIG.12 is an explanatory drawing to show a case where a plurality of wide angle images are matched in the horizontal direction.
FIG.13 is an explanatory drawing to show a case where a plurality of wide angle images are matched in the vertical direction.

### DETAILED DESCRIPTION OF THE PREFERRED EMBODIMENTS

A description will be given below on embodiments of the present invention by referring to the attached drawings.

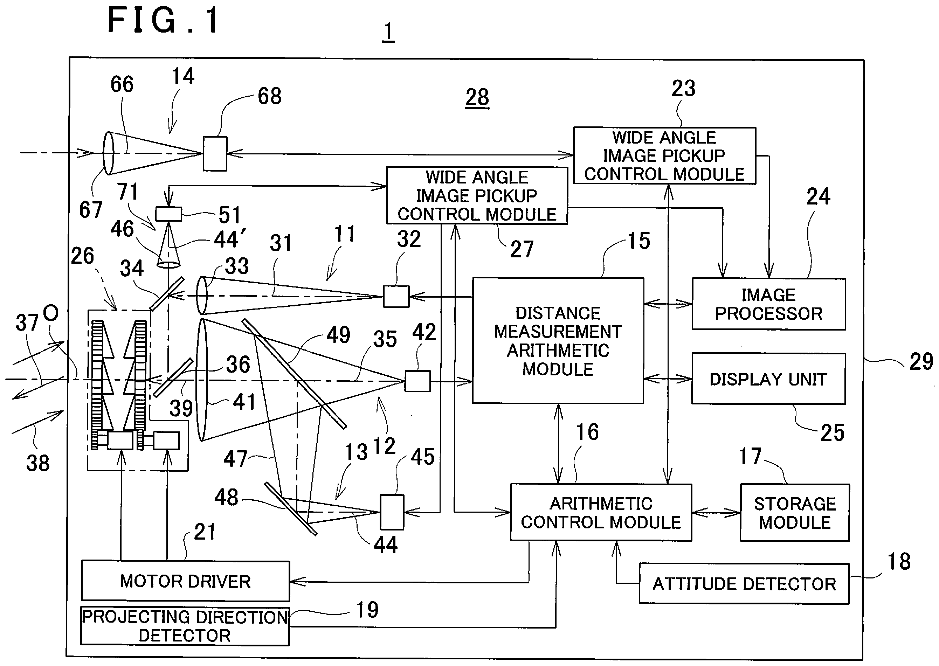

First, by referring to FIG.1, a description will be given on a surveying instrument according to a first embodiment.

The surveying instrument 1 mainly includes a distance measuring light projecting module 11, a light receiving module 12, a detecting light projecting module 13, a wide angle image pickup module 14, a narrow angle image pickup module 71 (to be described later), a distance measurement arithmetic module 15, an arithmetic control module 16, a storage module 17, an attitude detector 18, a projecting direction detector 19, a motor driver 21, a wide angle image pickup control module 23, an image processor 24, a display unit 25, an optical axis deflector 26, and a narrow angle image pickup control module 27, and these components are accommodated and integrated in a casing 29. It is to be noted that the distance measuring light projecting module 11, the light receiving module 12, the distance measurement arithmetic module 15, the optical axis deflector 26, and the like make up a distance measuring module 28 with a function as an electronic distance meter.

As each of the distance measurement arithmetic module 15 and the arithmetic control module 16, a CPU specialized for the present embodiment, a general-purpose CPU, an embedded CPU, a microprocessor, or the like is used. Further, as the storage module 17, a semiconductor memory such as a RAM, a ROM or a Flash ROM, a magnetic recording memory such as an HDD, or an optical recording memory such as a CDROM is used.

In the storage module 17, various types of programs for carrying out the present embodiment are stored. The distance measurement arithmetic module 15 and the arithmetic control module 16 develop and execute the stored programs, respectively. Further, various types of data, for instance, measurement data and image data are stored in the storage module 17.

The arithmetic control module 16 controls the optical axis deflector 26 via the motor driver 21. Further, the arithmetic control module 16 controls a deflection of a distance measuring optical axis via the optical axis deflector 26, and performs an integration control over the distance measurement arithmetic module 15, the wide angle image pickup control module 23, and the narrow angle image pickup control module 27, a synchronous control for a distance measurement, an image pickup, and a detection of a retroreflective detecting light, and the like.

The attitude detector 18 detects a tilt of the surveying instrument 1 with respect to the horizontality or the verticality, and a detection result is input to the arithmetic control module 16. Further, as the attitude detector 18, a tilt detector such as a tilt sensor is used, and an attitude detection device disclosed in Japanese Patent Application Publication No. 2016-151423 may be used.

The distance measuring light projecting module 11 has a projecting optical axis 31. Further, the distance measuring light projecting module 11 has a light emitter 32, a light projecting lens 33 and a beam splitter 34 as a deflecting optical component, which are provided on the projecting optical axis 31, and a reflecting mirror 36 as a deflecting optical component provided on a light receiving optical axis 35 (to be described later). The light emitter 32 is, for instance, a laser diode (LD) which emits the distance measuring light 37 such as red light or near-infrared light onto the projecting optical axis 31. Further, the projecting optical axis 31 is deflected by the beam splitter 34 and the reflecting mirror 36 so as to coincide with the light receiving optical axis 35. The reflecting mirror 36 has a shape which is approximately equivalent to or slightly larger than a light flux diameter of the distance measuring light 37, and approximately equivalent to each of wavelength dispersion compensation prisms 55 and 58 (to be described later). The reflecting mirror 36 and the wavelength dispersion compensation prisms 55 and 58 occupy a limited portion with the light receiving optical axis 35 as a center.

The beam splitter 34 may be a half mirror, but a polarization beam splitter with polarization optical characteristics is desirable. For instance, the beam splitter 34 has optical characteristics for reflecting the S-polarized light and transmitting the P-polarized light therethrough.

The beam splitter 34 and the reflecting mirror 36 make up a projecting optical axis module.

The light emitter 32 pulse-emits a laser beam or burst-emits the laser beam. The distance measuring light projecting module 11 projects a pulsed laser beam (or a burst-emitted laser beam) emitted from the light emitter 32 as the distance measuring light 37. It is to be noted that the burst emission is disclosed in Japanese Patent Application Publication No. 2016-161411.

A description will be given on the light receiving module 12. The reflected distance measuring light 38 reflected by an object to be measured enters the light receiving module 12. The light receiving module 12 has the light receiving optical axis 35, and the projecting optical axis 31 deflected by the beam splitter 34 and the reflecting mirror 36 coincides with the light receiving optical axis 35.

It is to be noted that a state where the projecting optical axis 31 coincides with the light receiving optical axis 35 is determined as a distance measuring optical axis 39.

The optical axis deflector 26 is arranged on the reference optical axis "O". The reference optical axis "O" is a straight optical axis transmitted through the center of the optical axis deflector 26. The reference optical axis "O" coincides with the projecting optical axis 31, the light receiving optical axis 35, a detecting light optical axis 44 (to be described later), and the distance measuring optical axis 39 when no deflection is performed by the optical axis deflector 26.

An focusing lens 41 lens 41 is arranged on the light receiving optical axis 35 as transmitted through the optical axis deflector 26. Further, on the light receiving optical axis 35, a photodetector 42 is provided. The photodetector 42 is, for instance, an avalanche photodiode (APD) or an equivalent photoelectric conversion element.

The focusing lens 41 lens 41 focuses the reflected distance measuring light 38 on the photodetector 42. The photodetector 42 receives the reflected distance measuring light 38, and produces a photodetecting signal. The photodetecting signal is input to the distance measurement arithmetic module 15. The distance measurement arithmetic module 15 performs a measurement of a distance to the object (optical wave distance measurement) based on a transmission signal of the distance measuring light 37, a photodetecting signal of the reflected distance measuring light 38 and a light velocity. As the signal of the distance measuring light 37 and the signal of the reflected distance measuring light 38, it is possible to use various types of signals, for instance, a light emission timing signal of the distance measuring light 37 and a photodetecting timing signal of the reflected distance measuring light 38, or a phase signal of the distance measuring light 37 and a phase signal of the reflected distance measuring light 38 (a phase difference signal).

It is to be noted that, as the measurement, a prism measurement in which the object has a retroreflective ability or a non-prism measurement in which the object has no retroreflective ability is performed.

The optical axis deflector 26, the focusing lens 41 lens 41, the photodetector 42, and the like make up the light receiving module 12.

A description will be given on the detecting light projecting module 13. The detecting light projecting module 13 has the detecting light optical axis 44. Further, the detecting light projecting module 13 has a detecting light source 45, a reflecting mirror 48, a split mirror 49, the focusing lens 41 lens 41, the reflecting mirror 36, and the optical axis deflector 26 which are arranged on the detecting light optical axis 44. The detecting light optical axis 44 is deflected by the reflecting mirror 48 and the split mirror 49 and coincides with the light receiving optical axis 35 and the distance measuring optical axis 39. Here, the focusing lens 41 functions as a projecting lens in the detecting light projecting module 13.

It is to be noted that, as the detecting light source 45 which emits a detecting light 47, a light emitting source such as a laser diode (LD) is used, and the detecting light 47 preferably has a wavelength equal or close to that of the distance measuring light 37. As the detecting light 47, a light with a red color to the near-infrared, for instance, a light in a wavelength band ranging from 650 nm to 850 nm is used. Further, as the detecting light source 45, a light beam emitted from the laser diode may be led through an optical fiber so that a projection end face of the optical fiber can be adopted as the detecting light source.

The detecting light 47 is turned to a parallel light flux by the focusing lens 41, transmitted through the optical axis deflector 26, and applied coaxially with the distance measuring light 37. In a case where the object does not have the retroreflective ability, the detecting light reflected by the object enters the optical axis deflector 26 coaxially with the reflected distance measuring light 38, and the detecting light is transmitted through the optical axis deflector 26 and then reflected by the reflecting mirror 36.

The reflecting mirror 36 separates the retroreflective detecting light from the distance measuring optical axis 39, and superimposes a part of the retroreflective detecting light on the narrow angle image pickup optical axis 44'. The beam splitter 34 is arranged on the narrow angle image pickup optical axis 44', and a focusing lens 41 lens 46 and a narrow angle image pickup element 51 are arranged on the narrow angle image pickup optical axis 44'.

The distance measuring optical axis 39 and the narrow angle image pickup optical axis 44' are partly common, and the detecting light projecting module 13, the beam splitter 34, the focusing lens 46, the narrow angle image pickup element 51, and the like function as a narrow angle image pickup module 71 which acquires an image of a measuring point portion. Further, the narrow angle image pickup module 71 acquires a narrow angle image in a predetermined image positional relationship (for instance, the distance measuring optical axis 39 is an image center) with reference to the distance measuring optical axis 39. Further, the narrow angle image pickup optical axis 44' coincides with the distance measuring optical axis 39 between the optical axis deflector 26 and the object, and hence the narrow angle image pickup optical axis 44' is partially shared with the distance measuring optical axis 39.

Further, the narrow angle image pickup element 51 picks up a retroreflective detecting light reflected by the retroreflective ability of an object as a part of the narrow image together with the object and a background light, and an acquired image data is input to the narrow angle image pickup control module 27. The retroreflective detecting light can be used as a feature image (or a feature point) at the time of the image matching.

The narrow angle image pickup element 51 is a CCD or a CMOS sensor which is an aggregation of pixels, and a position of each pixel on an image element can be identified. For instance, each pixel has pixel coordinates in a coordinate system with the narrow angle image pickup optical axis 44' as an origin, and its position on the image element can be identified by the pixel coordinates. Each pixel outputs the pixel coordinates together with a light receiving signal to the arithmetic control module 16.

The narrow angle image pickup control module 27 is able to perform a timing control for turning on or off the detecting light source 45 so as to enable the retroreflective detecting light in the narrow angle image to be clarified. Further, some of functions of the arithmetic control module 16 may be allocated to the narrow angle image pickup control module 27.

Only a light transmitted through wavelength dispersion compensation prisms 55 and 58 (to be described later) enters the narrow angle image pickup element 51.

As described above, the detecting light projecting module 13, the focusing lens 41 lens 46, the narrow angle image pickup element 51 and the like also functions as a narrow angle image pickup module 71 which acquires an image of a predetermined range which a measuring point which is an irradiating position of the distance measuring light 37 as a center. function as a narrow angle image pickup module 71 which acquires an image of a predetermined range of a measuring point as a center. In this case, the detecting light optical axis 44 and the narrow angle image pickup optical axis 44' are equal to a narrow angle image pickup optical axis of the narrow angle image pickup module 71.

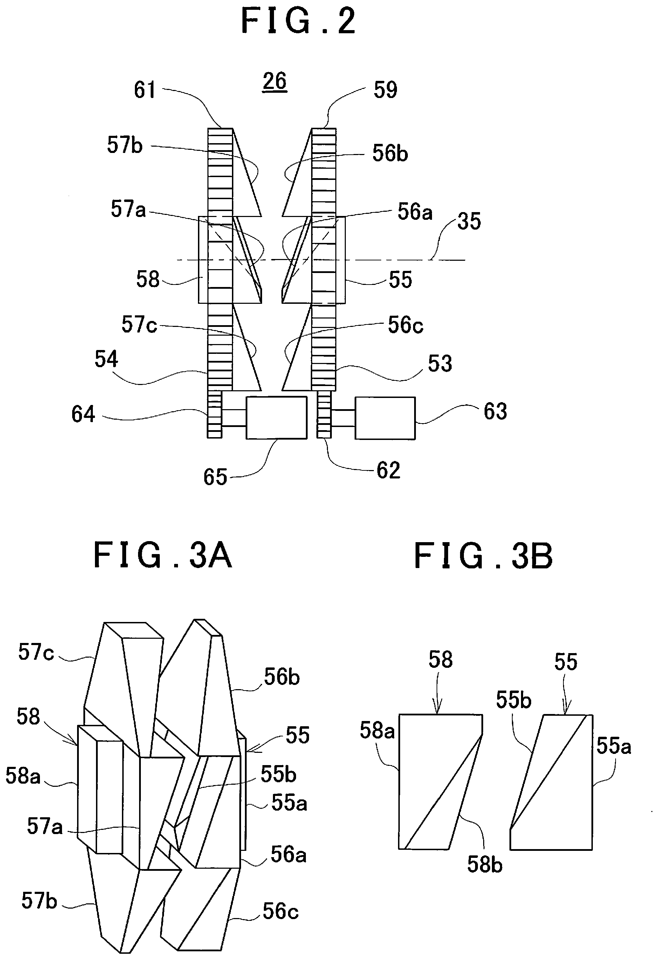

A description will be given on the optical axis deflector 26 by referring to FIG.2, FIG.3A, and FIG.3B.

The optical axis deflector 26 is constituted of the pair of disk prisms 53 and 54. The disk prisms 53, 54 have discoid shapes with the same diameter respectively, and are concentrically arranged on the light receiving optical axis 35, orthogonally to the light receiving optical axis 35 and in parallel each other at a predetermined interval. The disk prism 53 is made with an optical glass, and has a plurality of prism columns arranged in parallel as a basic configuration and a wavelength dispersion compensation prism 55 arranged in a central portion. The wavelength dispersion compensation prism 55 is a composite prism provided by attaching an optical prism 55a and an optical prism 55b to each other. It is to be noted that, in the drawing, the disk prism 53 has three prism columns (for instance, rod-shaped triangular prisms, which will be referred to as triangular prisms hereinafter) 56a, 56b.and 56c.

Likewise, the disk prism 54 is made with an optical glass, has three prism columns 57a, 57b, and 57c (for instance, rod-shaped triangular prisms, hereinafter referred to as triangular prisms) arranged in parallel as a basic configuration, and has a wavelength dispersion compensation prism 58 arranged in a central portion. The wavelength dispersion compensation prism 58 is a composite prism provided by attaching an optical prism 58a and an optical prism 58b to each other. It is to be noted that the triangular prisms 56a, 56b, and 56c and the triangular prisms 57a, 57b, and 57c all have the same optical deflection characteristics of the same deflection angle. Further, the wavelength dispersion compensation prisms 55 and 58 are fabricated in such a manner that their optical deflection characteristics become the same as the optical deflection characteristics of the triangular prisms 56a, 56b, and 56c and the triangular prisms 57a, 57b, and 57c.

The wavelength dispersion compensation prism 55 and the wavelength dispersion compensation prism 58 have the same configuration and are point-symmetrically arranged. Further, the size of each of the wavelength dispersion compensation prisms 55 and 58 (lengths of each of the triangular prisms 56a and 57a in a longitudinal direction and a width direction) is larger than a beam diameter of the distance measuring light 37.

The wavelength dispersion compensation prism 55 and 58 are a distance measuring light deflector which is a first optical axis deflector through which the distance measuring light 37 is transmitted and from which the same is projected. Further, portions excluding the wavelength dispersion compensation prisms 55 and 58 (both end portions of the triangular prisms 56a and 57a, the triangular prisms 56b and 56c, and the triangular prisms 57b and 57c) are a reflected distance measuring light deflector as a second optical axis deflector through which the reflected distance measuring light 38 is entered and transmitted.

The disk prisms 53 and 54 are arranged in such a manner that they are rotatable independently and individually around the light receiving optical axis 35, respectively. By independently controlling the disk prism 53 and 54, rotating directions, rotation amounts, and rotation speeds of the disk prisms 53 and 54, the projecting optical axis 31 of the distance measuring light 37 as projected is deflected to an arbitrary direction. Further, the disk prisms 53 and 54 deflect the light receiving optical axis 35 of the reflected distance measuring light 38, which is received, in parallel with (coaxially with) the projecting optical axis 31.

An outer shape of each of the disk prisms 53 and 54 is a circular shape with the light receiving optical axis 35 (the reference optical axis "O") as a center. Further, the spread of the reflected distance measuring light 38 is taken into consideration, and diameters of the disk prisms 53 and 54 are set in such a manner that a sufficient light amount can be acquired.

A ring gear 59 is fitted on an outer periphery of the disk prism 53, and a ring gear 61 is fitted on an outer periphery of the disk prism 54.

A driving gear 62 meshes with the ring gear 59, and the driving gear 62 is fixed to an output shaft of a motor 63. Likewise, a driving gear 64 meshes with the ring gear 61, and the driving gear 64 is fixed to an output shaft of a motor 65. The motors 63 and 65 are electrically connected with the motor driver 21.

As the motors 63 and 65, motors capable of detecting rotation angles are used, or motors rotating in correspondence with driving input values, for instance, pulse motors are used. Alternatively, rotation angle detectors which detect rotation amounts (rotation angles) of the motors, for instance, encoders may be used for detecting rotation amounts of the motors 63 and 65. The rotation amounts of the motors 63 and 65 are detected respectively, and the arithmetic control module 16 individually controls the motors 63 and 65 through the motor driver 21. It is to be noted that the encoders may be directly mounted on the ring gears 59 and 61, respectively in such a manner that rotation angles of the ring gears 59 and 61 are directly detected by the encoders.

The driving gears 62 and 64 and the motors 63 and 65 are provided at positions where these components do not interfere with other constituent components, such as the distance measuring light projecting module 11, for instance, below the ring gears 59 and 61.

As shown in FIG.3B, the wavelength dispersion compensation prism 55 is constituted by attaching the two optical prisms 55a and 55b with different wavelength characteristics (dispersion amounts, refraction indexes).

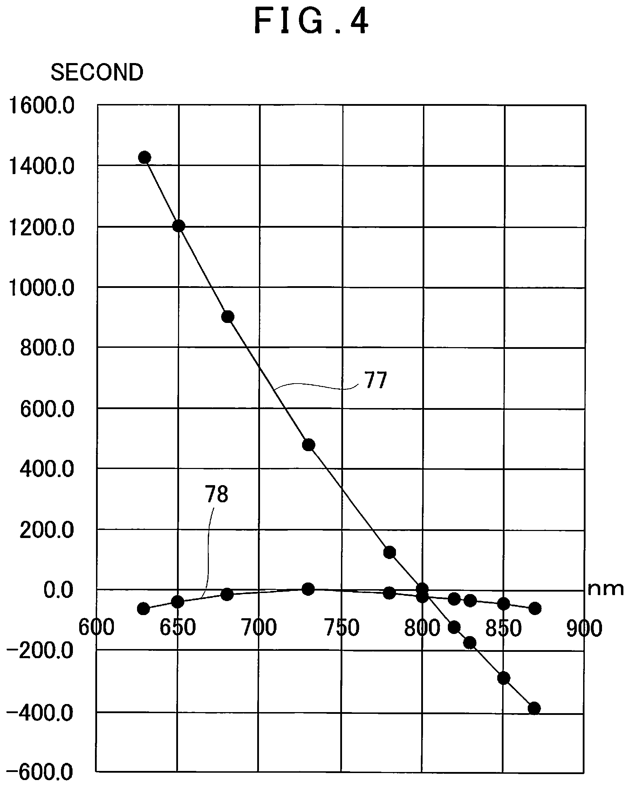

FIG.4 is a graph showing an error example with respect to a wavelength of the light, such as the reflected tracking light or the reflected detecting light in a case where deflection angles of the distance measuring light optical axis 39 and the detecting light optical axis 44 are set 30°. In FIG.4, a reference numeral 77 denotes an error when normal prisms (triangular prisms) are used, and a reference numeral 78 denotes an error when the wavelength dispersion compensation prisms 55 and 58 are used.

As shown in FIG.4, in a case where in normal prism, the light with a wavelength of approximately 800 nm is used, almost no error causes (causes no dispersion) due to a single wavelength. However, in a case where in the normal prism, when a wavelength band of the light to be used is extended, the error dramatically increases (the dispersion is produced). For instance, in a case where an image is acquired by using the light in a wavelength band of 650 nm to 850 nm, a large dispersion is produced in the range of approximately -400.0 to 1400.0 seconds, and an acquired image becomes a significantly blurred image. To reduce the blur with the normal prism, the wavelength band must be narrowed, and the dispersion must be decreased. In this case, a sufficient light amount cannot be obtained, and a dark image is produced, and hence an exposure time must be increased in order to acquire a sufficient light amount and a bright image.

On the other hand, in a case where the wavelength dispersion compensation prisms 55 and 58 are used, the dispersion can be decreased to the range of -100.0 to 0.0 second even in the wavelength band of 650 nm to 850 nm. Therefore, even if the exposure time is short, a less-blurred fine image with a sufficient light amount can be acquired, and a precise sighting or an image tracking is enabled.

The light projecting lens 33, the beam splitter 34, and the reflecting mirror 36, the distance measuring light deflector (the first optical axis deflector) and the like make up a distance measuring light projecting optical system. Further, the split mirror 49, the focusing lens 41 lens 41, the reflected distance measuring light deflector (the second optical axis deflector) and the like make up a detecting light projecting optical system. Further, the distance measuring light deflector (the first optical axis deflector), the focusing lens 41 lens 46 and the like make up a narrow angle image pickup optical system.

The wide angle image pickup module 14 has a wide angle image pickup optical axis 66, which is parallel to the reference optical axis "O" of the surveying instrument 1, and an image pickup lens 67 and a wide angle image pickup element 68 which are arranged on the wide angle image pickup optical axis 66. The wide angle image pickup module 14 has a field angle which is equivalent or substantially equivalent to a maximum deflection range (for instance, a deflection angle ±35°) provided by the optical axis deflector 26, and the wide angle image pickup module 14 acquires the image data including the maximum deflection range. Here, the substantially equivalent field angle is a field angle which is slightly larger than the maximum deflection range of the optical axis deflector 26.

The distance measurement arithmetic module 15 controls the light emitter 32 and makes the light emitter 32 to pulse-emit or burst-emit (intermittently emits) a laser beam as the distance measuring light 37. The projecting optical axis 31 is deflected by the wavelength dispersion compensation prisms 55 and 58 (the distance measuring deflector) in such a manner that the distance measuring light 37 is directed toward the object. In a state where the distance measuring optical axis 39 has sighted the object, the distance measurement of a sighting position (a measuring point) of the object is performed.

The reflected distance measuring light 38 reflected from the object enters through the triangular prisms 56b and 56c, the triangular prisms 57b and 57c (the reflected distance measuring light deflector) and the focusing lens 41, and is received by the photodetector 42. It is to be noted that, if the object is a prism (the prism measurement), the reflected distance measuring light 38 retro-reflected by the prism is received by the photodetector 42. Further, if the object is not a prism (the non-prism measurement), the reflected distance measuring light 38 naturally reflected by the object is received by the photodetector 42. The photodetector 42 transmits a photodetecting signal to the distance measurement arithmetic module 15. The distance measurement arithmetic module 15 performs the distance measurement of a measuring point (a point irradiated with the distance measuring light) every pulsed light based on the photodetection signal from the photodetector 42, and the distance measurement data are stored in the storage module 17.

The projecting direction detector 19 counts driving pulses input to the motors 63 and 65, and detects rotation angles of the motors 63 and 65. Alternatively, based on signals from the encoders, the rotation angles of the motors 63 and 65 are detected. Further, the projecting direction detector 19 calculates rotating positions of the disk prisms 53 and 54 based on the rotation angles of the motors 63 and 65. Further, the projecting direction detector 19 calculates a deflection angle and a projecting direction of the distance measuring light 37 every pulsed light based on refraction indexes and the rotating positions of the disk prisms 53 and 54. A calculation result (an angle measurement result) is associated with a distance measurement result, and input to the arithmetic control module 16. It is to be noted that, in a case where the distance measuring light 37 is burst-emitted, the distance measurement and the angle measurement are performed every intermittent distance measuring light.

The arithmetic control module 16 controls respective rotation amounts and rotating directions of the motors 63 and 65, thereby the arithmetic control module 16 enables a deflection amount and a deflecting direction of the distance measuring optical axis 39 by the optical axis deflector 26 to control. Further, the arithmetic control module 16 controls respective rotating directions and rotation speeds of the motors 63 and 65 and a rotation ratio between the motors 63 and 65, thereby the arithmetic control module 16 enables a deflecting operation by the optical axis deflector 26 to dynamically control and enables the distance measuring optical axis 39 to scan in an arbitrary direction or according to an arbitrary pattern.

A description will be given on a deflecting operation and a scan operation by the optical axis deflector 26 by referring to FIG.2, FIG.3, and FIG.5.

FIG.2 shows a state where the triangular prisms 56a, 56b and 56c and the triangular prisms 57a, 57b and 57c are placed in the same direction, and a maximum deflection angle (for instance, ±30°) can be acquired in this state. Further, in FIG.3A, any one of the disk prisms 53 and 54 is at a position rotated 180°, and mutual optical operations of the disk prisms 53 and 54 are offset, and a minimum deflection angle (0°) is acquired. Therefore, an optical axis (the distance measuring optical axis 39) of a pulsed laser beam projected and received through the disk prisms 53 and 54 coincides with the reference optical axis "O".

The distance measuring light 37 is emitted from the light emitter 32, and the distance measuring light 37 is turned to a parallel light flux by the light projecting lens 33, transmitted through the distance measuring light deflector (the wavelength dispersion compensation prisms 55 and 58), and projected toward the object. Here, by being transmitted through the distance measuring light deflector, the distance measuring light 37 is deflected and projected in a desired direction by the wavelength dispersion compensation prisms 55 and 58. It is to be noted that since the distance measuring light 37 is a laser beam having a single wavelength or a substantially single wavelength, a caused dispersion is slight when being transmitted through the optical axis deflector 26.

The reflected distance measuring light 38 as reflected by the object is transmitted through the reflected distance measuring light deflector, enters the light receiving module 12, and is focused on the photodetector 42 by the focusing lens 41 lens 41.

When the reflected distance measuring light 38 is transmitted through the reflected distance measuring light deflector, an optical axis of the reflected distance measuring light 38 is deflected by the triangular prisms 56b and 56c and the triangular prisms 57b and 57c so as to coincide with the light receiving optical axis 35.

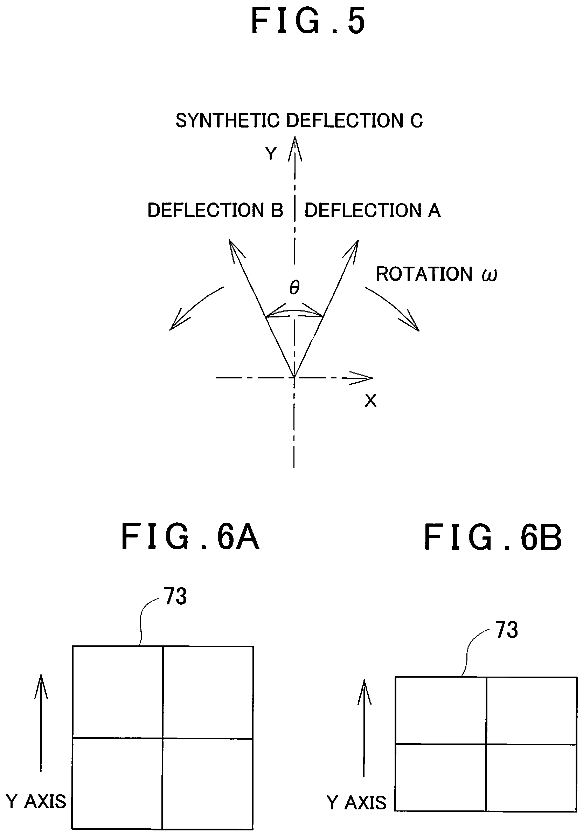

FIG.5 shows a case where the disk prism 53 and the disk prism 54 are relatively rotated each other. Assuming that a deflecting direction of an optical axis deflected by the disk prism 53 is a deflection "A" and a deflecting direction deflected by the disk prism 54 is a deflection "B", the deflections of the optical axes provided by the disk prisms 53 and 54 becomes a synthetic deflection "C" when an angular difference "θ" is present between the disk prisms 53 and 54.

A combination of rotating positions of the disk prism 53 and the disk prism 54 enables a deflecting direction and a deflection angle of the distance measuring light 37 as projected to arbitrarily change.

Further, in a state where a positional relationship between the disk prism 53 and the disk prism 54 is fixed (in a state where a deflection angle acquired by the disk prism 53 and the disk prism 54 is fixed), by integrally rotating the disk prism 53 and the disk prism 54 by the motors 63 and 65, a locus (a scan pattern) drawn by the distance measuring light 37 as transmitted through the distance measuring light deflector forms a circle with the reference optical axis "O" as a center. Further, a combination of the rotation of the disk prism 53 and the rotation of the disk prism 54 enables forming a necessary two-dimensional closed loop scan pattern. For instance, in a deflecting range of the optical axis deflector 26, the distance measuring light 37 enables to reciprocally scan linearly at a horizontal direction and a vertical direction.

The arithmetic control module 16 calculates a horizontal angle and a vertical angle of a measuring point with respect to the reference optical axis "O" from a deflection angle and a projecting direction of the distance measuring light 37, that is, detection results of the projecting direction detector 19. Further, by associating the horizontal angle and the vertical angle with respect to the measuring point with the distance measurement data, the arithmetic control module 16 is able to acquire the three-dimensional data of the object.

The wide angle image pickup control module 23 controls photographing of the wide angle image pickup module 14. The wide angle image pickup control module 23 synchronizes a timing for acquiring a frame image constituting a video image or the continuous image with a timing for performing the distance measurement by the surveying instrument 1 when the wide angle image pickup module 14 acquires the video image or the continuous image. Further, in a case of acquiring an image by the narrow angle image pickup module 71 (see FIG.1), the timing for acquiring an image by the narrow angle image pickup module 71 is synchronized with the timing for performing the distance measurement.

The narrow angle image pickup module 71 acquires an image of an irradiation point of the distance measuring light 37, and hence the narrow angle image pickup module 71 functions as a finder for a distance measurement portion. Further, since an image as acquired is an image of a narrow field angle (for instance, 5°) near the distance measuring optical axis 39, a distortion is small. Further, since an image acquired by the narrow angle image pickup module 71 is acquired with the use of a background light alone which has been transmitted through the wavelength dispersion compensation prisms 55 and 58, the dispersion of the wavelength is compensated, and a less-distorted or less-blurred fine image is acquired.

Here, in an image acquired by the narrow angle image pickup module 71, when a synthetic deflection "C" direction is determined as a "Y" axis direction (see FIG.5), a magnification in the "Y" axis direction changes in correspondence with a magnitude of an angular difference "θ" between the disk prism 53 and the disk prism 54.

Each of FIG.6A and FIG.6B shows a narrow angle image 73 acquired by the narrow angle image pickup module 71. FIG.6A shows a case where the magnification in the "Y" axis direction of the narrow angle image 73 does not changed. Further, FIG.6B shows a case where the magnification in the "Y" axis direction of the narrow angle image 73 changes and the narrow angle image 73 contracts in the "Y" axis direction.

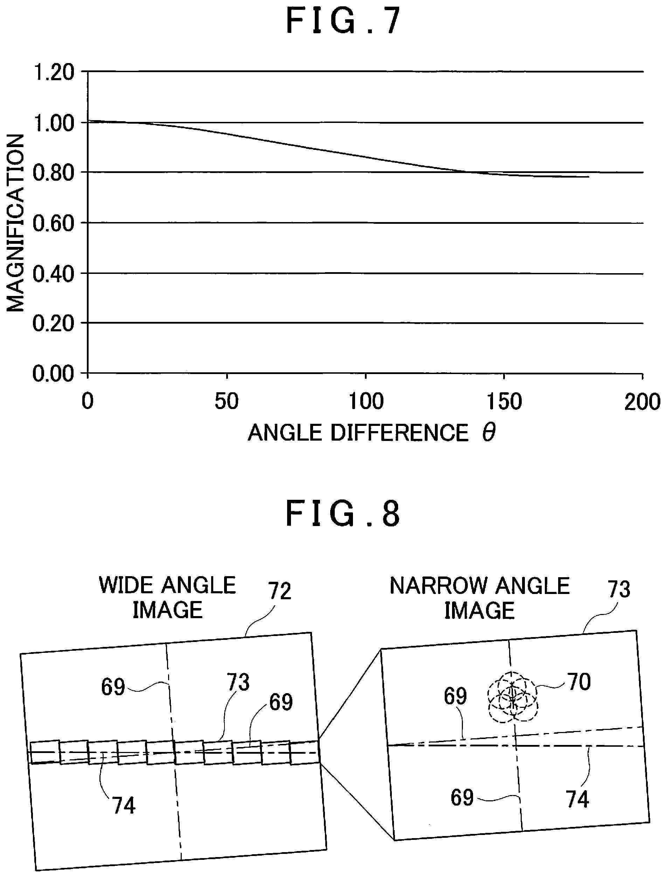

Further, FIG.7 is a graph showing a relationship between the angular difference "θ" between the disk prism 53 and the disk prism 54 and a change in magnification in the "Y" axis direction. As shown in FIG.7, regarding the narrow angle image 73, the magnification in the "Y" axis direction changes as the angular difference "θ" increases, and the magnification in the "Y" axis direction changes by up to approximately 20%. For instance, as shown in FIG.3A, in a state where the disk prisms 53 and 54 are arranged so that a minimum deflection angle can be acquired, the angular difference is assumed θ=0°. The narrow angle image 73 contracts in the "Y" axis direction as the angular difference "θ" increases. On the other hand, as shown in FIG.2, in a state where the disk prisms 53 and 54 are arranged so that a maximum deflection angle can be acquired, the angular difference is assumed θ=0°. The narrow angle image 73 contracts in the "Y" axis direction at most, and the narrow angle image 73 expands in the Y axis direction as the angular difference "θ" increases. Further, a relationship between the angular difference "θ" and the magnification in the "Y" axis direction can be known in advance by, for instance, performing the actual measurement. Therefore, the image processor 24 can acquire the angular difference "θ" (see FIG.5) from a detection result of the projecting direction detector 19, correct the magnification, and restore an original image.

The arithmetic control module 16 also performs associating an image of a narrow field angle (a narrow angle image) with the measurement data (the distance measurement data, the angle measurement data).

The wide angle image pickup element 68 is a CCD or a CMOS sensor which is an aggregation of pixels, and a position of each pixel on the wide angle image pickup element 68 can be identified. For instance, each pixel has pixel coordinates in a coordinate system with the wide angle image pickup optical axis 66 as an origin, and a position of each pixel on the wide angle image pickup element 68 can be identified by the pixel coordinates. Each pixel outputs the pixel coordinates together with a photodetecting signal to the arithmetic control module 16.

Therefore, sighting directions of a plurality of objects (measuring points) included in a wide angle image can be immediately recognized on the wide angle image with the use of the pixel coordinates of the wide angle image.

Further, since the wide angle image pickup optical axis 66 of the wide angle image pickup module 14 and the narrow angle image pickup optical axis 44' have a known relationship, it is easy to associate a wide angle image acquired by the wide angle image pickup module 14 with a narrow angle image acquired by the narrow angle image pickup module 71.

The image processor 24 performs an image processing, for instance, an edge extraction processing, an extraction of feature points as an image or a retroreflective detecting light, and an image matching with respect to image data acquired by the wide angle image pickup module 14 and the narrow angle image pickup module 71. The three-dimensional measurement can be performed with the use of a photogrammetry by the image matching, and three-dimensional modeling is enabled.

Meanwhile, rough correspondence points of the wide angle image corresponding to the narrow angle image based on the deflection angle and deflecting direction detected by the projecting direction detector 19 are approximately matched. On the other hand, due to a difference in optical characteristics (magnifications, distortions) between the wide angle image pickup module 14 and the narrow angle image pickup module 71 and due to optical characteristics (wavelengths, changes in magnification) of the wavelength dispersion compensation prisms 55 and 58, the rough correspondence points are not particularly matched. Therefore, in the three-dimensional measurement using the narrow angle image, it is important to accurately extract precise correspondence points in the narrow angle image.

Further, in a case where colors are used for the wide angle image and a wavelength of a red or near-infrared light close to a wavelength of a measuring light source LD (the light emitter 32) is used for the narrow angle image, feature points extracted in the wide angle image may be different from those in the narrow angle image. For this reason, it is important to accurately extract the feature points or the retroreflective detecting light in the narrow angle image.

Further, when the image processor 24 acquires the narrow angle image, the image processor 24 corrects the narrow angle image in such a manner that the magnification in the "Y" axis direction becomes 1 based on a relationship between the angular difference "θ" and the magnification in the "Y" axis direction.

Further, the optical axis deflector 26 can change a deflecting direction of the distance measuring light 37, that is, the narrow angle image pickup optical axis 44' at a high resolution. While slightly deflecting a deflection angle of the narrow angle image pickup optical axis 44' by the optical axis deflector 26 based on predetermined settings in the arithmetic control module 16, the narrow angle image pickup module 71 performs an image pickup and acquires a plurality of narrow angle images as slightly shifted. Further, the projecting direction detector 19 detects a projecting direction of each narrow angle image, and the image processor 24 overlaps the narrow angle images with a fineness less than a pixel based on the plurality of slightly shifted narrow angle images and detection results of the respective projecting directions, and produces a highly minute image.

Further, the narrow angle image pickup control module 27 acquires a plurality of narrow angle images while changing the deflection angle by angle steps slightly smaller than a narrow field angle, and the image processor 24 can acquire a detailed image of a wide range by synthesizing the narrow angle images based on a detection result of the projecting direction as detected by the projecting direction detector 19.

Further, in the image processor 24, by overlapping the wide angle image and the narrow angle image at the same magnification, it is possible to correct a distortion of the wide angle image with the use of a detection result provided by the projecting direction detector 19.

The display unit 25 displays a wide angle image 72 acquired by the wide angle image pickup module 14, and displays a narrow angle image 73 acquired by the narrow angle image pickup module 71. Further, the display unit 25 can display the wide angle image 72 superimposed on the narrow angle image 73, and can also enlarge and display the narrow angle image 73 shown in the wide angle image 72. Further, the display unit 25 can display a local scan portion 70 superimposed on the narrow angle image 73 in a case where a narrow angle range has been locally scanned. It is to be noted that the local scan can be performed by carrying out a scan with the distance measuring light 37 in an arbitrary pattern under control of the optical axis deflector 26. For instance, the local scan enables acquiring the three-dimensional data for each pulsed light along a locus of the local scan portion 70, and hence the point cloud data can be acquired.

Alternatively, as shown in FIG.8, a relationship between the narrow angle image 73 and a horizontal line 74 is shown in the wide angle image 72. It is to be noted that the horizontal line 74 is a straight line indicative of the horizontality, and the horizontal line 74 can be set at an arbitrary position in the wide angle image 72 based on a detection result of the attitude detector 18. In FIG.8, the horizontal line 74 is set at a position running through an image center of the wide angle image 72. It is to be noted that center lines 69, 69 each of which divides a longitudinal or lateral direction into two are shown in the wide angle image 72 and the narrow angle image 73, and an intersection of the center lines 69, 69 is an image center.

As described above, the reference optical axis O and the wide angle image pickup optical axis 66 have a known relationship. Further, a position of the measuring point (a position of a pixel) in the wide angle image 72 is acquired as a field angle with respect to the reference optical axis "O". A direction angle of a predetermined position (for instance, an image center, namely, the distance measuring optical axis 39) in the narrow angle image 73 with respect to the reference optical axis "O" (a direction angle of the distance measuring light 37) is detected based on a detection result of the projecting direction detector 19 and pixel coordinates of the narrow angle image 73.

Further, since a tilt angle of the reference optical axis "O" with respect to a horizontality can be acquired by the attitude detector 18, the horizontal line 74 is associated with the reference optical axis "O". Further, based on a relationship between the horizontal line 74 and the reference optical axis "O", a relationship of the wide angle image 72 and the narrow angle image 73 with respect to the horizontal line 74 can be acquired. Therefore, the positions of the wide angle image 72 and the narrow angle image 73 are associated with the horizontal line 74 by a relationship between the image center of the wide angle image 72 and the image center of the narrow angle image 73.

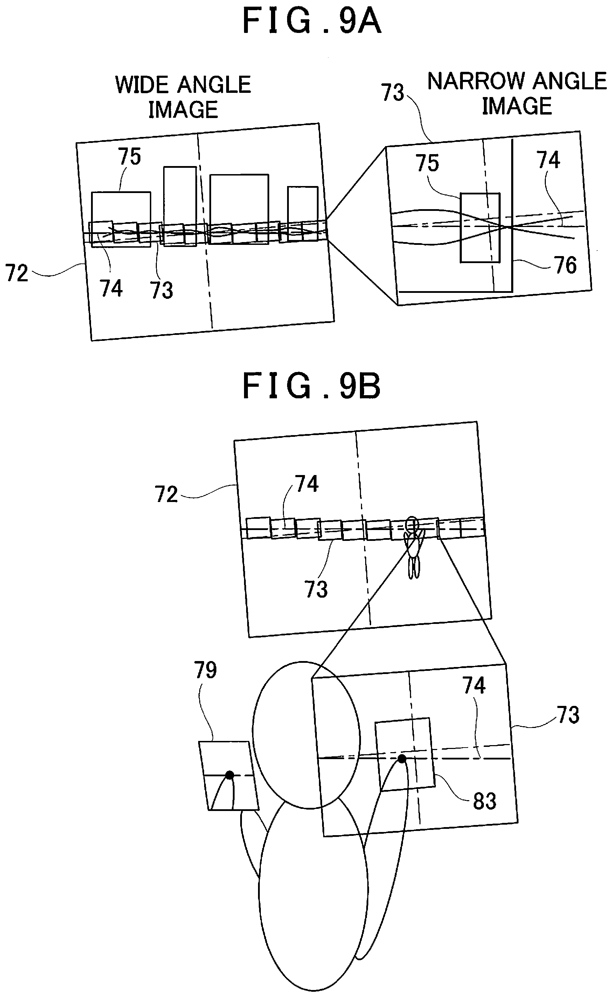

Next, a description will be given on an example of a measuring operation according to a first embodiment of the present invention by referring to FIG.8, FIG.9(A) and FIG.9(B). It is to be noted that a case where the surveying instrument 1 performs the non-prism measurement will be described below.

FIG.9(A) shows the wide angle image 72 acquired so that a building 75 can be included in the image and the narrow angle image 73 including a ridge line of the building 75 in the narrow angle image 73 acquired along the horizontal line 74.

To acquire a horizontal cross section of the object, the surveying instrument 1 is first installed at a predetermined position and directed toward the object to be measured. In the present embodiment, the object is the building 75. Further, in this instance, the surveying instrument 1 tilts with respect to the horizontality at a predetermined angle without being leveled up.

The arithmetic control module 16 drives an optical axis deflector 26, and performs a local scan a predetermined number of times (a predetermined cycle) along the horizontal line 74 set at an arbitrary position. Further, each narrow angle image 73 is sequentially acquired in parallel with the local scan. In FIG.9, the horizontal line 74 is set in such a manner that the horizontal line 74 runs through the image center of the wide angle image 72. Further, in this instance, it is desirable for neighboring narrow angle images 73 to overlap by a predetermined amount.

The arithmetic control module 16 selects an image including a ridge line extending in an up-and-down direction of the building 75 among the plurality of narrow angle images 73 acquired along the horizontal line 74. The arithmetic control module 16 causes the image processor 24 to perform the processing, for instance, the edge detection so that a ridge line extending in the up-and-down direction of the building 75 is detected as a vertical portion ridge line 76. The ridge line extending in the up-and-down direction of the building 75 may be regarded as being substantially vertical. Therefore, the ridge line extracted from the building 75 can be set as the vertical portion ridge line 76. It is to be noted that, as a method for extracting vertical lines by the image processing, there is a method disclosed in Japanese Patent Application Publication No. 2017-142081.

Here, a horizontal distance from the surveying instrument 1 to the vertical ridge line 76 is constant irrespective of a height position of the vertical portion ridge line 76. That is, in a case where a point on the vertical portion ridge line 76, measuring any position enables acquiring a horizontal distance to the vertical portion ridge line 76.

Therefore, in a local scan performed along the horizontal line 74, a measurement result of an arbitrary measuring point on the vertical portion ridge line 76 acquired by performing the scan crossing the vertical portion ridge line 76 is acquired. Based on a detection result of the attitude detector 18, a detection result of the projecting direction detector 19, and a distance measurement result of the distance measuring module 28 at that moment, the arithmetic control module 16 can calculate the horizontal distance between the surveying instrument 1 and the vertical portion ridge line 76. That is, based on a measurement result of the vertical portion ridge line 76, an accurate horizontal position of the surveying instrument 1 with respect to the vertical portion ridge line 76 can be acquired.

Further, in the local scan performed along the horizontal line 74, by extracting a measurement result of a measuring point placed on the horizontal line 74 or by performing the interpolation between measuring points near the horizontal line 74, the arithmetic control module 16 enables acquiring the horizontal cross-sectional data at a height of the horizontal line 74. The acquired horizontal cross-sectional data is associated with the wide angle image 72 and the narrow angle image 73, and stored in the storage module 17.

As described above, in the first embodiment, the horizontal line 74 is set at an arbitrary height, the local scan is performed along the horizontal line 74 more than once, and a horizontal cross section of the height of the horizontal line 74 is acquired based on a measurement result of each measuring point placed on the horizontal line 74.

Therefore, since performing the local scan along the horizontal line 74 can suffice, the scan does not have to be performed in the entire area of the wide angle image 72 or the narrow angle image 73, and hence the number of the measuring points to be measured can be greatly reduced. Thereby, a time required to complete the acquisition of the point cloud data can be shortened, the number of data to be acquired can be reduced, and hence the scan of the horizontal cross section can be efficiently carried out.

Further, the vertical portion ridge line 76 is extracted from the narrow angle image 73, and the local scan is performed along the horizontal line 74 so as to cross the vertical portion ridge line 76. Further, based on a measurement result of the vertical portion ridge line 76, a horizontal position of the surveying instrument 1 with respect to the vertical portion ridge line 76 is calculated. Therefore, at the time of acquiring the horizontal position of the surveying instrument 1, the accurate horizontal position of the surveying instrument 1 can be acquired without being affected by a change of or irregularities on a surface of the object. Further, since the vertical portion ridge line 76 is extracted based on the narrow angle image 73, the vertical portion ridge line 76 can be highly accurately extracted.

Further, since the acquired horizontal cross-sectional data is stored in association with the wide angle image 72 and the narrow angle image 73, a position whose horizontal cross-sectional data has been acquired can be visually confirmed, and hence the workability can be improved.

It is to be noted that, in the first embodiment, the local scan is performed along the horizontal line 74 more than once, and the point cloud data (the scan data) along the horizontal line 74 is acquired. On the other hand, in case of calculating a horizontal distance between both ends of the building 75, measuring one point on each vertical portion ridge line 76 on both the ends can suffice.

Further, in the first embodiment, the local scan is performed along the horizontal line 74 more than once, but a reciprocating scan may be linearly performed along the horizontal line 74.

Further, a communication module (not shown) may be additionally provided to the surveying instrument 1 and the communication module may enable to communicate with a terminal device such as a tablet or a smartphone. FIG.9(B) shows a case where the leveling (the horizontal leveling) is performed with the use of the surveying instrument 1.

A terminal device 79 can transmit and receive the wide angle image 72 or the narrow angle image 73 to and from the surveying instrument 1. Further, the terminal device 79 can instruct the surveying instrument 1 to perform the measurement or the leveling via the communication module. Further, the terminal device 79 can enlarge and display a position specified by a worker in the narrow angle image 73 displayed in a display unit of the terminal device 79 as a partial image 83. It is to be noted that, in FIG.9(B), the narrow angle image 73 and the partial image 83 displayed in the terminal device 79 are shown on the right side of a worker.

Alternatively, the arithmetic control module 16 may cause the image processor 24 to recognize a fingertip or the like of the worker in the narrow angle image 73. In this case, the arithmetic control module 16 selects the narrow angle image 73 including the fingertip, enlarges a fingertip portion in the narrow angle image 73 as the partial image 83, and transmits the partial image 83 to the terminal device 79 via the communication module. The terminal device 79 displays the received partial image 83.

It is to be noted that the transmission and the reception of images between the surveying instrument 1 and the terminal device 79 are carried out in real time. That is, the partial image 83 is configured to follow the movement of the worker's fingertip and also move.

The worker sets a height for the leveling (a height of the horizontal line 74) while making reference to the horizontal line 74 shown in the narrow angle image 73 or the partial image 83. The set conditions are transmitted to the surveying instrument 1, and the set height is associated with the narrow angle image 73 or the partial image 83 and stored in the storage module 17.

Since the narrow angle image 73 or the partial image 83 is displayed in the terminal device 79 in real time, the worker can directly visually confirm the object and specify a level position. Therefore, since the worker does not have to directly operate the surveying instrument 1 from the vicinity thereof, the level height can be efficiently set.

Further, since the set height is associated with the narrow angle image 73 or the partial image 83 and stored in the storage module 17, the set height can be visually confirmed, and the workability can be improved.

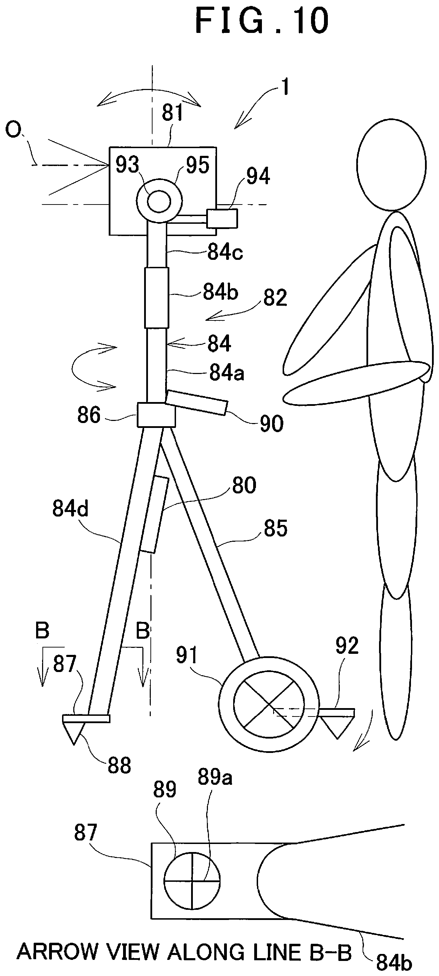

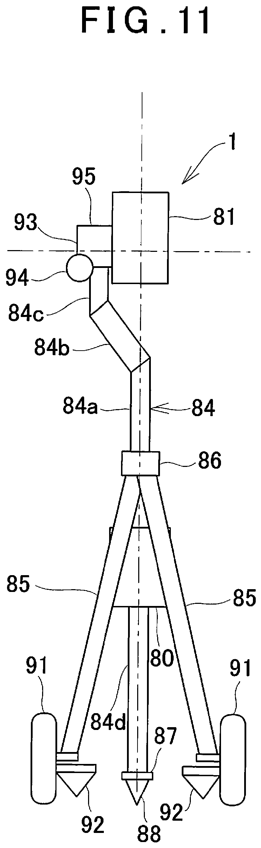

Next, a description will be given on a second embodiment of the present invention by referring to FIG.10 and FIG.11. It is to be noted that, in FIG.10 and FIG.11, the same components as shown in FIG.1 are referred by the same symbols, and a detailed description thereof will be omitted. In the second embodiment, likewise, a surveying instrument 1 performs the non-prism survey.

In the second embodiment, a surveying instrument main body 81 and a support device 82 are provided, and the surveying instrument 1 described in the first embodiment is provided as the surveying instrument main body 81 on the support device 82.

It is to be noted that the surveying instrument main body 81 has the same configuration as that of the surveying instrument 1 described in the first embodiment, and hence a description thereof will be omitted.

Further, in FIG.10, a reference numeral 80 denotes a processing control unit, and a reference numeral 90 denotes an operation panel. In the processing control unit 80, for instance, a high-performance arithmetic processor and a high-capacity battery are accommodated. The operation panel 90, the surveying instrument main body 81, and the processing control unit 80 can perform the data communication through various kinds of communicating means, for instance, a wired or wireless means. It is to be noted that, in a case where the high-performance arithmetic processor, the high-capacity battery and the like are unnecessary, the processing control unit 80 may be omitted.

The operation panel 90 may be fixedly provided on or may be attachable to and removable from the monopod 84. Further, in a case where the operation panel 90 is attachable and detachable, the operation panel 90 may be removed from the monopod 84, a worker may hold and operate the operation panel 90 as a single body.

The support device 82 includes the monopod 84 and two auxiliary legs 85.

The monopod 84 includes a vertical portion 84a extending in the up-and-down direction, a bending portion 84b which make the surveying instrument main body 81 to offset in the horizontal direction so that a machine center of the surveying instrument main body 81 is positioned on an axis extension of the vertical portion 84a, a support portion 84c extending upward from an upper end of the bending portion 84b, a leg coupling portion 86 which couples a leg provided at a lower end of the vertical portion 84a, and a leg portion 84d extending downward from a lower end of the leg coupling portion 86 while tilting toward a sighting direction. Here, to the leg coupling portion 86 is mounted a lock mechanism which stops or cancels the lateral rotation in the horizontal direction.

A reference plate 87 is provided to a lower end of the leg portion 84d, and a ferrule 88 is provided on a lower surface of the reference plate 87. The ferrule 88 has a tapered shape, and its lower end is a pointed end. A distance between the lower end and the machine center of the surveying instrument main body 81, and a positional relationship between the lower end and a reference optical axis "O" are known.

Further, a reference index 89 is provided (marked) on an upper surface of the reference plate 87, and the reference index 89 indicates a position of an apex of the ferrule 88. Further, one (a reference line 89a) of cross lines of the reference index 89 is parallel to the reference optical axis "O" of the surveying instrument main body 81, and a tip side of the reference line 89a is a sighting direction (a direction of the reference optical axis "O") of the surveying instrument main body 81.

It is to be noted that the vertical portion 84a can rotate about an axis of the vertical portion 84a with respect to the leg portion 84d and an auxiliary leg 85 by unlocking the lock mechanism.

Each of the two auxiliary legs 85 can rotate on an upper end thereof at a predetermined angle in a direction to get close to or away from the monopod 84, and can be fixed at a position where each leg has rotated. A wheel 91 is rotatably provided at a lower end of each of the auxiliary legs 85. The surveying instrument 1 can stand on its own by the monopod 84 and the two auxiliary legs 85.

It is to be noted that the surveying instrument main body 81 may be mounted on the monopod 84 in such a manner that the axis of the monopod 84 becomes orthogonal to the reference optical axis "O", or may be mounted on the monopod 84 in such a manner that the reference optical axis "O" becomes approximately horizontal when the surveying instrument 1 is made to stand on its own.

A shaft portion 93 and a lever 94 extending from the shaft portion 93 are provided on a side surface of the surveying instrument main body 81. Further, a longitudinal rotation angle encoder 95 as a longitudinal rotation detecting means for detecting a rotation angle in the vertical direction and a lock mechanism (not shown) configured to stop and cancel the rotation of the surveying instrument main body 81 are provided on the shaft portion 93. The shaft portion 93 is rotatably coupled to an upper end of the support portion 84c, and moving up and down the lever 94 causes the surveying instrument main body 81 to rotate in the longitudinal direction. Further, moving the lever 94 in the left-and-right direction causes the surveying instrument main body 81 to rotate in the lateral direction integrally with the support portion 84c, the bending portion 84b and the vertical portion 84a. Further, twisting the lever 94 operates the lock mechanism of the leg coupling portion 86 and the lock mechanism of the shaft portion 93, the lock mechanism locks the lateral rotation and the longitudinal rotation.

A rotation angle in the longitudinal direction of the surveying instrument main body 81 at this moment, for instance, a rotation angle (an elevation angle) in the vertical direction with respect to the horizontality is detected by the longitudinal rotation angle encoder 95. The rotation angle detected by longitudinal rotation angle encoder 95 is input to the arithmetic control module 16 of the surveying instrument main body 81.

It is to be noted that a machine center of the surveying instrument main body 81 is positioned on an axis of the vertical portion 84a, and the reference optical axis "O" crosses the axis of the vertical portion 84a.

Further, the wheel 91 provided at the lower end of the auxiliary les 85. A protrusion 92 as a fixing means is provided to each wheel 91 in a protrudable and retractable means, and the respective protrusions 92 are retracted in a moving state of the surveying instrument 1 whilst the protrusions 92 are protruded in an installed state of the surveying instrument 1. A protruding state of the protrusions 92 is fixed in a state where the wheels 91 are slightly lifted from an installation surface. At this moment, the surveying instrument main body 81 is supported on three points in a state where the ferrule 88 and the two protrusions 92 are in contact with the installation surface.

In the second embodiment, like the first embodiment, the surveying instrument 1 may be installed at a predetermined position, a direction of the surveying instrument main body 81 is fixed, and the measurement of an object within the range of a wide field angle may be performed.

In the second embodiment, the surveying instrument main body 81 is supported by the support device 82, the surveying instrument 1 can be easily moved, and hence measurements can be easily carried out from a plurality of points.

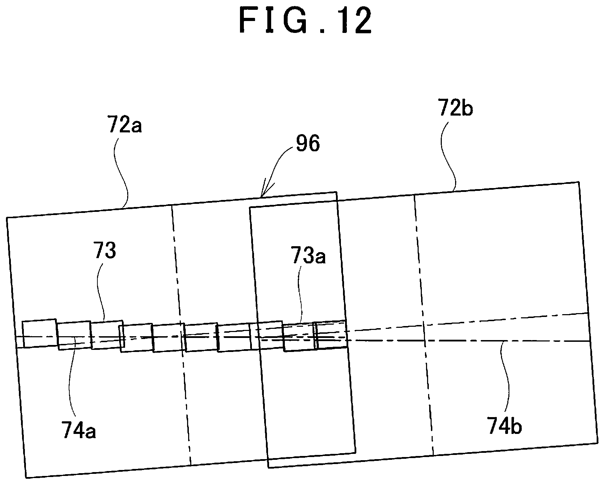

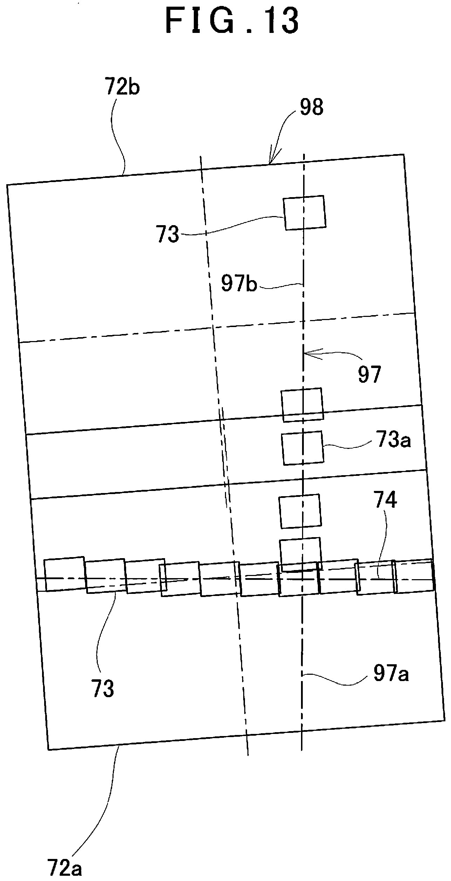

A description will now be given on a surveying instrument system which performs the image linkage (the image matching) based on a narrow angle image with the use of the surveying instrument 1 according to the second embodiment by referring to FIG.12 and FIG.13.

FIG.12 shows the image matching in the horizontal direction.

First, in a state where the lock mechanism of the leg coupling portion 86 is operated (a locked state), a first wide angle image 72a is acquired by a wide angle image pickup module 14 (see FIG.1). Further, a horizontal line 74 is set at a predetermined position in the first wide angle image 72a. For instance, the horizontal line 74 is positioned at a passing through an image center of the first wide angle image 72a in FIG.12. Further, the arithmetic control module 16 drives an optical axis deflector 26 (see FIG.1), acquires a plurality of narrow angle images 73 along the horizontal line 74a, and performs a local scan along the horizontal line 74a in the horizontal direction more than once.

The angle measurement of a reference optical axis "O" in this state is possible in a maximum deflection range of the optical axis deflector 26, and a horizontal angle can be acquired based on detection results of an attitude detector 18 (see FIG.1) and a projecting direction detector 19 (see FIG.1).

Next, the lock mechanism of the leg coupling portion 86 is released, the surveying instrument main body 81 is laterally rotated at a predetermined angle, the lock mechanism is again operated, and then a second wide angle image 72b is acquired. A rotation angle in this moment is an angle with which at least one or desirably two narrow angle images 73 are included in an overlap range of the first wide angle image 72a before the rotation and the second wide angle image 72b after the rotation.

Here, a height position of the surveying instrument main body 81 does not change even if the surveying instrument main body 81 is rotated. That is, the second wide angle image 72b acquired after the rotation becomes an image horizontally translated with respect to the first wide angle image 72a acquired before the rotation. Therefore, a horizontal line 74b continuous with a horizontal line 74a shown in the first wide angle image 72a can be easily shown in the second wide angle image 72b.

In the second wide angle image 72b, likewise, a plurality of narrow angle images 73 are acquired along the horizontal line 74b, and a local scan is performed along the horizontal line 74b in the horizontal direction more than once.

When the scan of the second wide angle image 72b is completed, the arithmetic control module 16 performs the image matching of the plurality of the narrow angle images 73a which are present respectively in an overlap portion of the first wide angle image 72a and the second wide angle image 72b. Under matching conditions obtained by the matching of the plurality of the narrow angle images 73a, the arithmetic control module 16 performs the image matching with the first wide angle image 72a and the second wide angle image 72b, creates a coupled wide angle image 96. The created coupled wide angle image 96 is associated with the horizontal line 74, and stored in a storage module 17.

It is to be noted that, in the wide angle image 72, a deflection angle between the reference optical axis O and an arbitrary position in the wide angle image 72 can be calculated based on a detection result of the attitude detector 18 and a deviation in the wide angle image 72 of the arbitrary position with respect to the reference optical axis "O". Therefore, with reference to an image center of the narrow angle image 73a used for the image matching, by calculating a horizontal angle of the first wide angle image 72a with respect to the reference optical axis "O" and a horizontal angle of the second wide angle image 72b with respect to the reference optical axis "O", the arithmetic control module 16 enables calculating a horizontal angle between the first wide angle image 72a and the second wide angle image 72b.

As described above, in the second embodiment, the surveying instrument main body 81 is rotated about the monopod 84 in the lateral direction, and the wide angle images 72 acquired at respective rotating positions are subjected to the image matching in the lateral direction by the arithmetic control module 16. Therefore, a measurement range in the horizontal direction can be expanded. That is, a scan range (a deflection range) at the time of acquiring the horizontal cross-sectional data can be expanded, and the horizontal cross-sectional data in a wider range can be acquired.

Further, in the second embodiment, the imaging matching of the first wide angle image 72a and the second wide angle image 72b is performed using the narrow angle images 73 present in the overlap portion. Therefore, the image matching can be highly accurately performed, and the highly accurate coupled wide angle image 96 can be created.

It is to be noted that, in the second embodiment, the description has been given on the case where the surveying instrument main body 81 is manually rotated. On the other hand, it is needless to say that the image matching can be likewise performed in a case where the surveying instrument main body 81 is automatically rotated by the motor driving.

Next, a description will be given on a third embodiment of the present invention by referring to FIG.13. It is to be noted that, in FIG.13, the same components as shown in FIG.12 are referred by the same symbols, and a detailed description thereof will be omitted. In the third embodiment, likewise, a surveying instrument 1 performs the non-prism survey.

The third embodiment is configured to perform the matching of the plurality of wide angle images 72 in the longitudinal direction and acquire a vertical cross section of an object. It is to be noted that FIG.13 shows a case where a vertical portion of a building 75 is present in a wider range than a maximum deflection angle of an optical axis deflector 26.

Moving up and down the lever 94 causes the surveying instrument main body 81 to rotate about the shaft portion 93 in the longitudinal direction. However, depending on an installation state of the surveying instrument main body 81, even if the surveying instrument main body 81 is rotated in the longitudinal direction, the surveying instrument main body 81 does not rotate in the vertical direction. For instance, in a case where the surveying instrument main body 81 has tilted with respect to the horizontality, the surveying instrument main body 81 rotates on a tilt with respect to the verticality.

Therefore, in case of matching the plurality of the wide angle images 72 in the longitudinal direction, a horizontal angle before rotating the surveying instrument main body 81 must be associated with a horizontal angle after the rotating the surveying instrument main body 81.

In case of matching the plurality of wide angle images 72 in the longitudinal direction, a first wide angle image 72a before the rotation is first acquired by the wide angle image pickup module 14. Further, a relationship between the narrow angle image 73 and the horizontal line 74 is shown in the first wide angle image 72a, and a vertical line 97a is set at a predetermined position in the first wide angle image 72a. The vertical line 97a is a straight line orthogonal with respect to the horizontal line 74. Further, the optical axis deflector 26 is driven, a plurality of narrow angle images 73 are acquired along the vertical line 97a at predetermined intervals, and a local scan is performed along the vertical line 97a in the vertical direction more than once. Thereby, the point cloud data (the scan data) can be acquired along the vertical line 97a. arrow view along line B-B

The angle measurement of a reference optical axis O in this state is possible in a maximum deflection range of the optical axis deflector 26, and a horizontal angle can be acquired based on detection results of an attitude detector 18 and a projecting direction detector 19.

Next, the lever 94 is moved, the surveying instrument main body 81 is longitudinally rotated at a predetermined angle, and then a second wide angle image 72b is acquired. A rotation angle of the surveying instrument main body 81 in this moment is an angle with which at least one or desirably two narrow angle images 73 are included in an overlap range of the first wide angle image 72a before the rotation and the second wide angle image 72b after the rotation.

Here, the second wide angle 72b acquired after the rotation becomes an image translated with respect to the first wide angle image 72a acquired before the rotation in the rotating direction of the surveying instrument main body 81. Therefore, when the vertical line 97a shown in the first wide angle image 72a is extended, a vertical line 97b continuous with the vertical line 97a can be easily shown in the second wide angle image 72b.

In the second wide angle image 72b, likewise, a plurality of narrow angle images 73 are acquired along the vertical line 97b at predetermined intervals, and a local scan is performed along the vertical line 97b in the vertical direction more than once. Thereby, the point cloud data can be acquired along the vertical line 97b.

When the local scan of the second wide angle image 72b along the vertical line 97b is completed, the arithmetic control module 16 performs the image matching of the plurality of the narrow angle images 73a which are present respectively in an overlap portion of the first wide angle image 72a and the second wide angle image 72b. The arithmetic control module 16 performs the image matching with the first wide angle image 72a and the second wide angle image 72b via the matching of the plurality of the narrow angle images 73a, creates a coupled wide angle image 98.

Further, with reference to an image center of the narrow angle image 73a used for the image matching, a horizontal angle of the first wide angle image 72a with respect to the reference optical axis "O" and a horizontal angle of the second wide angle image 72b with respect to the reference optical axis "O" are calculated by the arithmetic control module 16, respectively. Thereby, a horizontal angle between the first wide angle image 72a and the second wide angle image 72b is calculated by the arithmetic control module 16. Further, a vertical angle between the first wide angle image 72a and the second wide angle image 72b can be calculated based on a detection result of the attitude detector 18.

The arithmetic control module 16 can acquire the vertical cross-sectional data along the scan data based on the scan data acquired along the vertical line 97. The acquired vertical cross-sectional data is associated with the coupled wide angle image 98, the vertical line 97, and the horizontal angles and the vertical angles before and after the rotation, and stored in the storage module 17.

As described above, in the third embodiment, the surveying instrument main body 81 is rotated in the longitudinal direction via the lever 94, and the plurality of the wide angle images 72 acquired at respective rotating positions are subjected to the matching in the longitudinal direction. Therefore, a measurement range in the vertical direction can be expanded. That is, a scan range at the time of acquiring the vertical cross-sectional data can be expanded, and the vertical cross-sectional data in a wider range can be acquired.

Further, the image matching of the first wide angle image 72a and the second wide angle image 72b is performed using the narrow angle image 73a present in the overlap portion. Therefore, the image matching can be highly accurately performed, and the highly accurate coupled wide angle image 98 can be created.

Further, by comparing a vertical portion ridge line 76 extracted from the building 75 with the vertical line 97, the arithmetic control module 16 enables to calculate how much the vertical portion ridge line 76 tilts with respect to the vertical line 97. That is, a tilt state of the building 75 can be determined.

Further, by sequentially coupling the wide angle images 72, the arithmetic control module 16 enables to acquire the vertical cross-sectional data of 180° from a foot level to a ceiling or the 360° whole circumference.

It is to be noted that, in the third embodiment, the description has been given on the case where the surveying instrument main body 81 is manually rotated in the longitudinal direction via the lever 94. On the other hand, the image matching can be likewise performed in a case where the surveying instrument main body 81 is automatically rotated by the motor driving.

## Claims

1. A surveying instrument comprising: a distance measuring light projecting module (11) configured to project a distance measuring light (37), a light receiving module (12) configured to receive a reflected distance measuring light (38), an attitude detector (18) configured to detect a tilt with respect to a horizontality, an optical axis deflector (26) provided on a common portion of a distance measuring optical axis (39) and a light receiving optical axis (35) and configured to integrally deflect said distance measuring optical axis and said light receiving optical axis, a projecting direction detector (19) configured to detect an optical axis deflection angle and a deflecting direction provided by said optical axis deflector, a wide angle image pickup module (14) having substantially a same field angle as a maximum deflection range of said optical axis deflector, a narrow angle image pickup module (71) which has a field angle narrower than said wide angle image pickup module and has a narrow angle image pickup optical axis (44') which is partially shared with said distance measuring optical axis, a distance measurement arithmetic module (15), and an arithmetic control module (16), wherein a wavelength dispersion compensating prism (55, 58) formed of a plurality of optical members having different wavelength characteristics is provided in a common portion of said distance measuring optical axis and said narrow angle image pickup optical axis, wherein said arithmetic control module is configured to control a optical axis deflection of said optical axis deflector and a distance measurement operation of said distance measurement arithmetic module, to make said wide angle image pickup module acquire a wide angle image (72) including a deflection range of said optical axis deflector, said distance measurement arithmetic module perform a distance measurement of a measuring point based on a transmission signal of said distance measuring light and a reception signal of said reflected distance measuring light, said narrow angle image pickup module is configured to receive a background light transmitted through said wavelength dispersion compensation prism and acquire a narrow angle image (73) with reference to said distance measuring optical axis, said arithmetic control module is configured to deflect said distance measuring optical axis in a horizontal direction by said optical axis deflector, to sequentially perform said distance measurement and an acquisition of said narrow angle image,
**characterized in that** said arithmetic control module (16) is configured to show a horizontal line (74) at a predetermined position of at least one of said wide angle image (72) and said narrow angle image (73) based on a detection result of said attitude detector (18), wherein said arithmetic control module (16) is configured to extract a ridge line of a building (75) in said narrow angle image (73), further detect a vertical portion ridge line (76) from said extracted ridge line, drive said optical axis deflector (26) so that a scan is performed with said distance measuring light (37) in a predetermined scan pattern, perform a scan with said distance measuring light along said horizontal line (74) so as to cross said vertical portion ridge line, and acquire said narrow angle image.

2. The surveying instrument according to claim 1, further comprising a surveying instrument main body (81) and a support device (82) configured to support said surveying instrument main body rotatably in a lateral direction, wherein a first wide angle image (72a) is acquired at a predetermined position, then said surveying instrument main body is rotated in the lateral direction, a second wide angle image (72b) is acquired so that said second wide angle image partially overlaps said first wide angle image, and said arithmetic control module (16) is configured to perform an image matching of said first wide angle image and said second wide angle image based on said at least one narrow angle image (73a) included in each overlap portion.

3. The surveying instrument according to claim 1 or 2, further comprising a surveying instrument main body (81) configured to be rotatable about a shaft portion (93) in a longitudinal direction, wherein a first wide angle image (72a) is acquired at a predetermined position, then said surveying instrument main body is rotated in said longitudinal direction, a second wide angle image (72b) is acquired so that said second wide angle image partially overlaps said first wide angle image, and said arithmetic control module (16) is configured to perform an image matching of said first wide angle image and said second wide angle image based on said at least one narrow angle image (73a) included in each overlap portion.

4. A surveying system comprising: a surveying instrument (1) according to one of claims 1 to 3 and a terminal device (79) configured to be communicable with said surveying instrument, wherein said terminal device is configured to enable a transmission and a reception of at least one of said wide angle image (72) and said narrow angle image (73) to and from said surveying instrument.

## Patentansprüche

1. Vermessungsinstrument, umfassend: ein Entfernungsmesslichtprojektionsmodul (11), das konfiguriert ist, ein Entfernungsmesslicht (37) zu projizieren, ein Lichtempfangsmodul (12), das konfiguriert ist, ein reflektiertes Entfernungsmesslicht (38) zu empfangen, einen Lagedetektor (18), der konfiguriert ist, eine Neigung in Bezug auf eine Horizontalität zu detektieren, einen optischen Achsablenker (26), der auf einem gemeinsamen Abschnitt einer optischen Abstandsmessachse (39) und einer optischen Lichtempfangsachse (35) vorgesehen ist und konfiguriert ist, die optische Abstandsmessachse und die optische Lichtempfangsachse integral abzulenken, einen Projektionsrichtungsdetektor (19), der konfiguriert ist, einen optischen Achsablenkwinkel und eine Ablenkrichtung zu detektieren, die von dem optischen Achsablenker bereitgestellt werden, ein Weitwinkel-Bildaufnahmemodul (14), das im Wesentlichen den gleichen Feldwinkel wie ein maximaler Ablenkbereich des optischen Achsablenkers aufweist, ein Schmalwinkel-Bildaufnahmemodul (71), das einen schmäleren Feldwinkel als das Weitwinkel-Bildaufnahmemodul aufweist und eine optische Schmalwinkel-Bildaufnahmeachse (44') aufweist, die teilweise mit der optischen Abstandsmessachse geteilt wird, ein arithmetisches Entfernungsmessmodul (15) und ein arithmetisches Steuermodul (16), wobei ein Wellenlängendispersionskompensationprisma (55, 58), gebildet aus einer Vielzahl von optischen Elementen mit unterschiedlichen Wellenlängencharakteristiken, in einem gemeinsamen Abschnitt der optischen Abstandsmessachse und der optischen Schmalwinkel-Bildaufnahmeachse vorgesehen ist, wobei das arithmetische Steuermodul konfiguriert ist, eine optische Achsablenkung des optischen Achsablenkers und einen Abstandsmessvorgang des arithmetischen Abstandsmessmoduls zu steuern, sodass das Weitwinkel-Bildaufnahmemodul ein Weitwinkelbild (72) einschließlich eines Ablenkbereichs des optischen Achsablenkers erfasst, das arithmetische Abstandsmessmodul eine Abstandsmessung eines Messpunkts auf Basis eines Übertragungssignals des Abstandsmesslichts und eines Empfangssignals des reflektierten Abstandsmesslichts durchführt, das Schmalwinkel-Bildaufnahmemodul konfiguriert ist, ein durch das Wellenlängendispersionskompensationsprisma übertragenes Hintergrundlicht zu empfangen und ein Schmalwinkelbild (73) in Bezug auf die optische Abstandsmessachse zu erfassen, das arithmetische Steuermodul konfiguriert ist, die optische Abstandsmessachse in einer horizontalen Richtung durch den optischen Achsablenker abzulenken, um die Abstandsmessung und eine Erfassung des Schmalwinkelbildes nacheinander durchzuführen,
**dadurch gekennzeichnet, dass** das arithmetische Steuermodul (16) konfiguriert ist, eine horizontale Linie (74) an einer vorbestimmten Position von mindestens einem Weitwinkelbild (72) und Schmalwinkelbild (73) auf Basis eines Detektionsergebnisses des Lagedetektors (18) anzuzeigen, wobei das arithmetische Steuermodul (16) konfiguriert ist, eine Kantenlinie eines Gebäudes (75) in dem Schmalwinkelbild (73) zu extrahieren, ferner eine vertikale Abschnitts-Kantenlinie (76) aus der extrahierten Kantenlinie zu detektieren, den optischen Achsablenker (26) so anzutreiben, dass ein Scan mit dem Abstandsmesslicht (37) in einem vorbestimmten Scanmuster durchgeführt wird, ein Scan mit dem Abstandsmesslicht entlang der horizontalen Linie (74) durchzuführen, um die vertikale Abschnitts-Kantenlinie zu kreuzen, und das Schmalwinkelbild zu erfassen.

2. Vermessungsinstrument nach Anspruch 1, ferner umfassend einen Vermessungsinstrument-Hauptkörper (81) und eine Lagervorrichtung (82), die konfiguriert ist, den Vermessungsinstrument-Hauptkörper in einer seitlichen Richtung drehbar zu lagern, wobei ein erstes Weitwinkelbild (72a) an einer vorbestimmten Position erfasst wird, dann der Vermessungsinstrument-Hauptkörper in der seitlichen Richtung gedreht wird, ein zweites Weitwinkelbild (72b) erfasst wird, sodass das zweite Weitwinkelbild das erste Weitwinkelbild teilweise überlappt, und das arithmetische Steuermodul (16) konfiguriert ist, einen Bildabgleich des ersten Weitwinkelbildes und des zweiten Weitwinkelbildes auf Basis des mindestens einen Schmalwinkelbildes (73a), das in jedem Überlappungsabschnitt enthalten ist, durchzuführen.

3. Vermessungsinstrument nach Anspruch 1 oder 2, ferner umfassend einen Vermessungsinstrument-Hauptkörper (81), der konfiguriert ist, um einen Schaftabschnitt (93) in einer Längsrichtung drehbar zu sein, wobei ein erstes Weitwinkelbild (72a) an einer vorbestimmten Position erfasst wird, dann der Vermessungsinstrument-Hauptkörper in der Längsrichtung gedreht wird, ein zweites Weitwinkelbild (72b) erfasst wird, sodass das zweite Weitwinkelbild das erste Weitwinkelbild teilweise überlappt, und das arithmetische Steuermodul (16) konfiguriert ist, einen Bildabgleich des ersten Weitwinkelbildes und des zweiten Weitwinkelbildes auf Basis des mindestens einen Schmalwinkelbildes (73a), das in jedem Überlappungsabschnitt enthalten ist, durchzuführen.

4. Vermessungssystem, umfassend: ein Vermessungsinstrument (1) nach einem der Ansprüche 1 bis 3 und ein Endgerät (79), das konfiguriert ist, mit dem Vermessungsinstrument zu kommunizieren, wobei das Endgerät so konfiguriert ist, eine Übertragung und einen Empfang von mindestens einem Weitwinkelbild (72) und Schmalwinkelbild (73) zu und von dem Vermessungsinstrument zu ermöglichen.

## Revendications

1. Un instrument d'arpentage comprenant un module de projection de lumière de mesure de distance (11) configuré pour projeter une lumière de mesure de distance (37), un module de réception de lumière (12) configuré pour recevoir une lumière de mesure de distance réfléchie (38), un détecteur d'attitude (18) configuré pour détecter une inclinaison par rapport à une horizontalité, un déflecteur d'axe optique (26) fourni sur une partie commune d'un axe optique de mesure de distance (39) et d'un axe optique de réception de lumière (35) et configuré pour dévier intégralement ledit axe optique de mesure de distance et ledit axe optique de réception de lumière, un détecteur de direction de projection (19) configuré pour détecter un angle de déviation de l'axe optique et une direction de déviation fournie par ledit déflecteur d'axe optique, un module de prise de vue à grand angle (14) ayant sensiblement le même angle de champ qu'une plage de déviation maximale dudit déflecteur d'axe optique, un module de prise de vue à angle étroit (71) dont l'angle de champ est plus étroit que celui dudit module de prise de vue à grand angle et dont l'axe optique de prise de vue à angle étroit (44') est partiellement partagé avec ledit axe optique de mesure de distance, un module arithmétique de mesure de distance (15) et un module de commande arithmétique (16), dans lequel un prisme de compensation de dispersion de longueur d'onde (55, 58) formé d'une pluralité d'éléments optiques ayant des caractéristiques de longueur d'onde différentes est fourni dans une partie commune dudit axe optique de mesure de distance et dudit axe optique de prise de vue à angle étroit, dans lequel ledit module de commande arithmétique est configuré pour commander une déviation de l'axe optique dudit déflecteur d'axe optique et une opération de mesure de distance dudit module arithmétique de mesure de distance, pour que ledit module de prise de vue à angle étroit acquière une image à angle étroit (72) comprenant une plage de déviation dudit déflecteur d'axe optique, ledit module arithmétique de mesure de distance effectue une mesure de distance d'un point de mesure sur la base d'un signal de transmission de ladite lumière de mesure de distance et d'un signal de réception de ladite lumière de mesure de distance réfléchie, ledit module de prise de vue à angle étroit est configuré pour recevoir une lumière de fond transmise par ledit prisme de compensation de dispersion de longueur d'onde et acquérir une image à angle étroit (73) en référence audit axe optique de mesure de distance, ledit module de commande arithmétique est configuré pour dévier ledit axe optique de mesure de distance dans une direction horizontale par ledit déflecteur d'axe optique, afin d'effectuer séquentiellement ladite mesure de distance et l'acquisition de ladite image à angle étroit,
**caractérisé en ce que** ledit module de commande arithmétique (16) est configuré pour afficher une ligne horizontale (74) à une position prédéterminée d'au moins l'une de ladite image grand angle (72) et de ladite image à angle étroit (73) sur la base d'un résultat de détection dudit détecteur d'attitude (18), dans lequel ledit module de commande arithmétique (16) est configuré pour extraire une ligne de crête d'un bâtiment (75) dans ladite image à angle étroit (73), détecter en outre une ligne de crête de partie verticale (76) à partir de ladite ligne de crête extraite, commander ledit déflecteur d'axe optique (26) de manière à effectuer un balayage avec ladite lumière de mesure de distance (37) selon un motif de balayage prédéterminé, effectuer un balayage avec ladite lumière de mesure de distance le long de ladite ligne horizontale (74) de manière à croiser ladite ligne de crête de partie verticale, et acquérir ladite image d'angle étroit.

2. L'instrument d'arpentage selon la revendication 1, comprenant en outre un corps principal d'instrument d'arpentage (81) et un dispositif de support (82) configuré pour supporter ledit corps principal d'instrument d'arpentage de manière rotative dans une direction latérale, dans lequel une première image grand angle (72a) est acquise à une position prédéterminée, puis ledit corps principal d'instrument d'arpentage est tourné dans la direction latérale, une deuxième image grand angle (72b) est acquise de sorte que ladite deuxième image grand angle chevauche partiellement ladite première image grand angle, et ledit module de commande arithmétique (16) est configuré pour effectuer une mise en correspondance de ladite première image grand angle et de ladite deuxième image grand angle sur la base d'au moins une image à angle étroit (73a) incluse dans chaque partie de chevauchement.

3. L'instrument d'arpentage selon la revendication 1 ou 2, comprenant en outre un corps principal d'instrument d'arpentage (81) configuré pour être rotatif autour d'une partie d'arbre (93) dans une direction longitudinale, dans lequel une première image grand angle (72a) est acquise à une position prédéterminée, puis ledit corps principal d'instrument d'arpentage est tourné dans ladite direction longitudinale, une deuxième image grand angle (72b) est acquise de sorte que ladite deuxième image grand angle chevauche partiellement ladite première image grand angle, et ledit module de commande arithmétique (16) est configuré pour effectuer une mise en correspondance de ladite première image grand angle et de ladite deuxième image grand angle sur la base d'au moins une image à angle étroit (73a) incluse dans chaque partie de chevauchement.

4. Système d'arpentage comprenant : un instrument d'arpentage (1) selon l'une des revendications 1 à 3 et un dispositif terminal (79) configuré pour être en communication avec ledit instrument d'arpentage, dans lequel ledit dispositif terminal est configuré pour permettre une transmission et une réception d'au moins une de ladite image grand angle (72) et de ladite image à angle étroit (73) vers et depuis ledit instrument de d'arpentage.
